Europäisches Patentamt

European Patent Office

Office européen des brevets

(11) Veröffentlichungsnummer: **0 017 718 B1**

(12) **EUROPÄISCHE PATENTSCHRIFT**

(45) Veröffentlichungstag der Patentschrift:
02.06.82

(21) Anmeldenummer: 80100658.6

(22) Anmeldetag: 08.02.80

(51) Int. Cl.³: **B 60 C 7/24,** B 60 B 17/02 //
B62D55/14

(54) Rad für Fahrzeuge, insbesondere Schienenfahrzeuge.

(30) Priorität: 21.02.79 DE 2906668

(43) Veröffentlichungstag der Anmeldung:
29.10.80 Patentblatt 80/22

(45) Bekanntmachung des Hinweises auf die Patenterteilung:
02.06.82 Patentblatt 82/22

(84) Benannte Vertragsstaaten:
AT CH DE FR GB IT

(56) Entgegenhaltungen:
FR-A-551 595
FR-E-26 702
GB-A-469 722
GB-A-1 141 608
GB-A-1 402 634
US-A-2 039 726

(73) Patentinhaber: DUEWAG Aktiengesellschaft, Duisburger Strasse 145, D-4150 Krefeld 11 (DE)

(72) Erfinder: Gerhard, Thomas, Kurpfalzstrasse 13,
D-6945 Hirschberg-Leutershausen (DE)
Erfinder: Giesen, Ulrich, Giesenweg 76,
D-4150 Krefeld 1 (DE)

Rad für Fahrzeuge, insbesondere Schienenfahrzeuge

Die Erfindung bezieht sich auf ein Rad für Fahrzeuge, insbesondere Schienenfahrzeuge, welches aus einer Felge mit einem darauf angeordneten Reifen aus elastischem Werkstoff, z. B. Gummi oder Kunststoff, besteht.

Es ist ein Rad gemäß dem Oberbegriff des Patentanspruchs 1 bekannt (GB-A-1 141 608), bei dem der mit dem Reifen zusammenwirkende, außen zylindrische Felgenansatz ein rechteckiges Profil aufweist. Weiter ist es nicht mehr neu (US-A-1 881 045, Fig. 5), den ebenfalls außen zylindrischen Felgenansatz in seinem Querschnitt schwalbenschwanzförmig, d. h., mit zur Lauffläche des Reifens divergierenden Seitenflächen auszubilden.

Dem Oberbegriff des Patentanspruchs 3 liegt ein bekanntes Fahrzeugrad zugrunde (US-A-1 881 045, Fig. 5), bei dem die beiden seitlichen Flansche des U-förmigen Felgenquerschnittes gegen den felgennahen Bereich der jeweiligen Seitenfläche des Reifens anliegen.

Zum Stand der Technik gehört ferner eine Laufrolle für Kettenfahrzeuge (GB-A-469 722), wobei ein auf der Felge der Laufrolle festgelegter Ring über mehrere schwalbenschwanzförmige Ansätze in eine elastische Bandage eingreift, die von einem die Lauffläche aufweisenden metallischen Reifen umgeben ist. Querbewegungen des metallischen Reifens werden durch Seitenwangen begrenzt, die mit der Felge über Schrauben verbunden sind.

Bei den vorbekannten Rädern dienen der Felgenansatz bzw. die beiden seitlichen Flansche des U-förmigen Felgenquerschnittes offensichtlich nur zum Halten des Reifens; diese Räder werden als ungünstig angesehen im Hinblick auf eine gemäß der Aufgabe zu der vorliegenden Erfindung geforderte bessere Ausnutzung des Werkstoffes des Reifens, verbunden mit der weiteren aufgabengemäßen Forderung nach einer größeren Dauerfestigkeit bei hoher Beanspruchung.

Diese Aufgabe wird durch die im Kennzeichenteil des Patentanspruchs 1 angegebenen Merkmale gelöst, wonach der in den Reifen eingreifende Felgenansatz in seinem Querschnitt trapezförmig, mit abgerundeten Kanten gestaltet ist, wobei die beiden Seitenflächen des trapezförmigen Felgenansatzes und die beiden äußeren Seitenflächen des Reifens zur Lauffläche des Reifens hin konvergierend ausgebildet sind.

Einem organischen Spannungsverlauf im Reifen dient eine Ausgestaltung der Erfindung dadurch, daß die beiden äußeren Seitenflächen des Reifens jeweils einen ersten, plan mit den Seitenflächen der Felge verlaufenden Abschnitt aufweisen, an denen sich jeweils eine Abrundung anschließt, die in die äußeren Seitenflächen des Reifens übergehen.

Eine weitere erfindungsgemäße Lösung der zugrunde liegenden Aufgabe besteht nach dem Kennzeichenteil des Patentanspruchs 3 darin, daß die beiden seitlichen Flansche des zwischen diesen Flanschen flach ausgebildeten Felgenquerschnittes sich mindestens bis in den Bereich des mittleren Durchmessers des Reifens erstrecken, der Reifen in unbelastetem Zustand mit beidseitigem axialem Spalt innerhalb dieser Flansche angeordnet ist und dieser Spalt so geformt ist, daß er während des Belastungsvorganges durch eine stetig steigende, von der Innenumfangsfläche des Reifens ausgehende Anlage der äußeren Seitenflächen des Reifens an den beiden seitlichen Flanschen der Felge überbrückt wird.

Nach einer Weiterbildung der vorgenannten erfindungsgemäßen Lösung ist vorgesehen, daß die beiden Flansche der Felge reifenseitig an ihren freien Enden mit Abrundungen und der Reifen im Bereich des Überganges seiner Lauffläche in seine beiden Seitenflächen mit den Abrundungen entsprechenden Ausnehmungen versehen sind. Mit diesen Maßnahmen werden vorteilhaft Anrisse an den Kanten der Lauffläche des Reifens vermieden, wenn dieser unter Belastung einfedert und der in dessen unbelastetem Zustand vorhandene Spalt, von der Innenumfangsfläche des Reifens ausgehend, zur Anlage an die Flansche der Felge kommt.

Bei der erfindungsgemäßen Lösung gemäß Patentanspruch 1 erbringt der trapezförmige Felgenansatz eine weitgehend gleichmäßige Verteilung der Schubspannungen über den Querschnitt des Reifens, wobei die Schubspannungen insbesondere in den in der Vergangenheit wegen hoher Spannungen zerstörungsgefährdeten Seitenbereichen des Reifens reduziert sind. Wegen dieser Reduzierung und des um den Felgenansatz verringerten Werkstoffvolumens des Reifens sowie wegen der über den Felgenansatz vergrößerten Kontaktfläche zwischen Reifen und Felge ergibt sich zum einen eine geringere Wärmeentwicklung und zum anderen eine bessere Wärmeableitung, so daß insgesamt eine größere Dauerfestigkeit bei hoher Beanspruchung erreicht wird.

Durch die im Patentanspruch 3 genannte Lösung werden die Verformung des Reifens und damit die Größe der Schubspannungen begrenzt, wobei diese Begrenzung lastabhängig erfolgt. Durch diese Begrenzung werden vorteilhaft die Schubspannungen gleichfalls weitgehend gleichmäßig über den Querschnitt des Reifens verteilt, wobei ebenso eine Reduzierung der Schubspannungen in den in der Vergangenheit besonders zerstörungsgefährdeten Seitenbereichen des Reifens erreicht wird. Die Spannungsreduzierung bewirkt außerdem eine geringere Wärmeentwicklung, womit insgesamt eine größere Dauerfestigkeit bei hoher Beanspruchung erzielt wird. Außerdem ergibt die Lösung nach Patentanspruch 3 eine Notlauffunktion für das Rad.

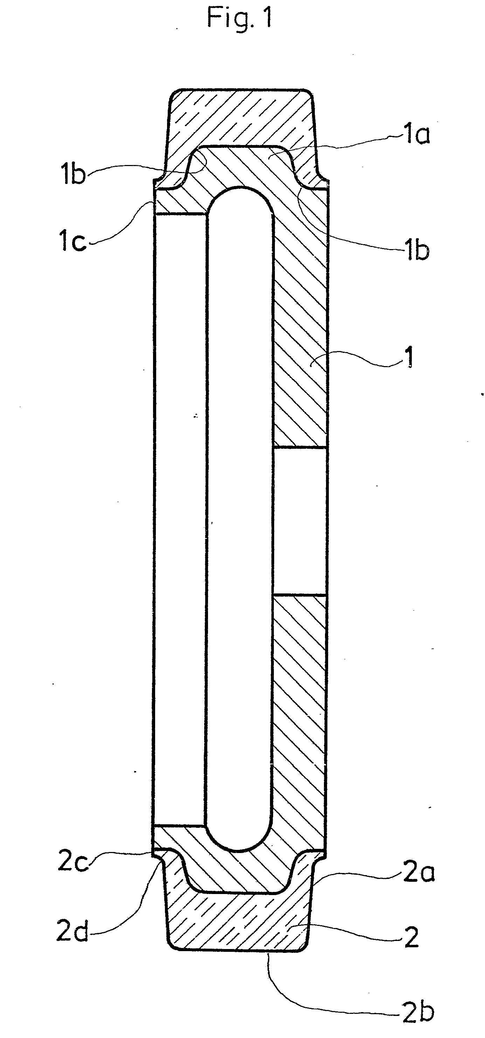

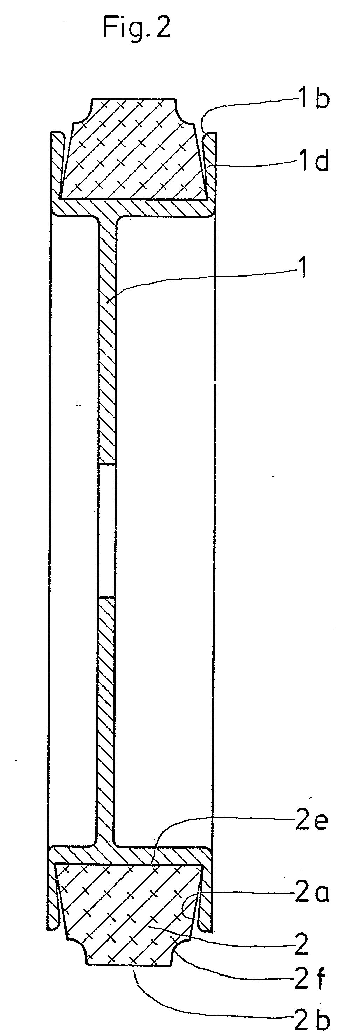

Ausführungsbeispiele der Erfindung sind in der Zeichnung dargestellt und werden im folgenden näher beschrieben. Die Fig. 1 und 2 zeigen jeweils unterschiedliche Fahrzeugräder, im Höhenschnitt.

Nach Fig. 1 ist das eine Rad aus der Felge 1 und dem Reifen 2 gebildet, wobei die Felge 1 vorzugsweise aus einem festen Werkstoff, z. B. Leichtmetall oder Stahl, der Reifen 2 aus einem elastischen Werkstoff, z. B. Gummi oder Kunststoff, besteht. Felge 1 und Reifen 2 sind durch Vulkanisieren, Pressen oder Kleben miteinander verbunden. Die Felge 1 weist den umlaufenden, trapezförmigen Ansatz 1a auf, der mit Abrundungen 1b versehen ist. Plan zu den beiden Seitenflächen 1c der Felge 1 verlaufen erste Abschnitte 2c des Reifens 2, denen sich Abrundungen 2d anschließen, die in konvergierend zu der Lauffläche 2b hin ausgebildete Seitenflächen 2a des Reifens 2 übergehen.

Nach Fig. 2 weist das andere Rad an der Felge 1 einen U-förmig ausgebildeten Querschnitt auf, wobei innerhalb dessen Flansche 1d der Reifen 2 angeordnet ist. Die Seitenflächen 2a des Reifens 2 sind zu seiner Lauffläche 2b hin konvergierend ausgebildet, so daß im unbelasteten Zustand zwischen den Flanschen 1d und den Seitenflächen 2a jeweils ein winkliger, von der Innenumfangsfläche 2e des Reifens 2 ausgehender Spalt besteht. Die freien Enden der beiden Flansche 1d sind reifenseitig jeweils mit einer Abrundung 1b und der Reifen 2 jeweils im Bereich des Überganges seiner Lauffläche 2b in die Seitenflächen 2a mit Ausnehmungen 2f versehen, womit Freiräume geschaffen sind, die bei Belastung des Reifens 2 zum Vermeiden von Beschädigungen am Reifen 2 wirksam werden. Während des Belastungsvorganges erfolgt eine stetig steigende Anlage der Seitenflächen 2a an den beiden Flanschen 1d und insoweit eine lastabhängige Begrenzung der Schubspannungen.

**Patentansprüche**

1. Rad für Fahrzeuge, insbesondere Schienenfahrzeuge, welches aus einer Felge (1) und einem darauf angeordneten Reifen (2) aus elastischem Werkstoff, z. B. Gummi oder Kunststoff, besteht, wobei die Felge (1) einen mittigen, umlaufenden Felgenansatz (1a) mit einer zylindrischen Außenkontur und der dicht gegen die Felge (1) und den Felgenansatz (1a) anliegende Reifen (2) eine korrespondierend ausgeführte Form aufweisen, dadurch gekennzeichnet, daß der in den Reifen (2) eingreifende Felgenansatz (1a) in seinem Querschnitt trapezförmig, mit abgerundeten Kanten (1b) gestaltet ist, wobei die beiden Seitenflächen des trapezförmigen Felgenansatzes (1a) und die beiden äußeren Seitenflächen (2a) des Reifens (2) zur Lauffläche des Reifens (2) hin konvergierend ausgebildet sind.

2. Rad nach Anspruch 1, dadurch gekennzeichnet, daß die beiden äußeren Seitenflächen (2a) des Reifens (2) jeweils einen ersten, plan mit den Seitenflächen (1c) der Felge (1) verlaufenden Abschnitt (2c) aufweisen, an denen sich jeweils eine Abrundung (2d) anschließt, die in die äußeren Seitenflächen (2a) des Reifens (2) übergehen.

3. Rad für Fahrzeuge, insbesondere Schienenfahrzeuge, welches aus einer Felge (1) und einem darauf angeordneten Reifen (2) aus elastischem Werkstoff, z. B. Gummi oder Kunststoff, besteht, wobei die Felge (1) einen U-förmig ausgebildeten Felgenquerschnitt aufweist, dessen beide seitliche Flansche (1d) zum Reifen (2) hin gerichtet sind, dadurch gekennzeichnet, daß die beiden seitlichen Flansche (1d) des zwischen diesen Flanschen (1d) flach ausgebildeten Felgenquerschnittes sich mindestens bis in den Bereich des mittleren Durchmessers des Reifens (2) erstrecken, der Reifen (2) in unbelastetem Zustand mit beidseitigem axialem Spalt innerhalb dieser Flansche (1d) angeordnet ist und dieser Spalt so geformt ist, daß er während des Belastungsvorganges durch eine stetig steigende, von der Innenumfangsfläche (2e) des Reifens (2) ausgehende Anlage der äußeren Seitenflächen (2a) des Reifens (2) an den beiden seitlichen Flanschen (1d) der Felge (1) überbrückt wird.

4. Rad nach Anspruch 3, dadurch gekennzeichnet, daß die beiden Flansche (1d) der Felge (1) reifenseitig an ihren freien Enden mit Abrundungen (1b) und der Reifen (2) im Bereich des Überganges seiner Lauffläche (2b) in seine beiden Seitenflächen (2a) mit den Abrundungen (1b) entsprechenden Ausnehmungen (2f) versehen sind.

**Claims**

1. A wheel for vehicles, especially railroad vehicles, which comprises a rim (1) and a tyre (2) of a resilient material, e.g. rubber or plastics, arranged thereon, the rim (1) being provided with a central, circumferential rim extension (1a) with a cylindrical external contour, and the tyre (2), lying closely against the rim (1) and the rim extension (1a), having a corresponding shape, characterised in that the rim extension (1a), which engages in the tyre (2), has a trapezium-shaped cross-section with rounded corners (1b), the two lateral faces of the trapezium-shaped rim extension (1a) and the two external lateral faces (2a) of the tyre (2) converging towards the running surface of the tyre (2).

2. A wheel according to claim 1, characterised in that the two external lateral faces (2a) of the tyre (2) in each case have a first section (2c) which extends in the same plane as the lateral faces (1c) of the rim (1) and adjacent to which there is in each case a rounded portion (2d), which portions merge into the external lateral faces (2a) of the tyre (2).

3. A wheel for vehicles, especially railroad vehicles, which comprises a rim (1) and a tyre (2) of a resilient material, e.g. rubber or plastics, arranged thereon, the rim (1) having a U-shaped cross-section whose two lateral flanges (1d) are directed towards the tyre (2), characterised in that the two lateral flanges (1d) of the rim cross-section, which is of flat construction between these flanges (1d), extend at least as far as the region of the mean diameter of the tyre (2), the tyre (2) is arranged with an axial gap on both sides within these flanges (1d) in the unloaded state, and this gap is formed such that it is filled during loading by the external lateral faces (2a) of the tyre (2) bearing to a constantly increasing extent on the two lateral flanges (1d) of the rim (1) starting from the inner peripheral face (2e) of the tyre (2).

4. A wheel according to claim 3, characterised in that the free ends of the two flanges (1d) of the rim (1) are provided on the tyre side with rounded portions (1b) and the tyre (2) is provided in the region of the transition of its running surface (2b) into its two lateral faces (2a) with recesses (2f) corresponding to the rounded portions (1b).

**Revendications**

1. Roue pour véhicules, notamment véhicules ferroviaires, qui se compose d'une jante (1) sur laquelle est monté un bandage (2) en matériau élastique, tel que caoutchouc ou matière synthétique, la jante (1) étant pourvue d'un appendice circulaire médian (1a) à contour extérieur cylindrique, et le bandage (2) appliqué étroitement contre la jante (1) et contre l'appendice (1a) présentant une forme correspondante, roue caractérisée en ce que l'appendice de jante (1a) qui est engagé dans le bandage (2) est formé avec une section transversale trapézoïdale avec des arêtes arrondies (1b), les deux faces latérales de l'appendice trapézoïdal (1a) et les deux faces latérales extérieures (2a) du bandage (2) étant convergentes en direction de la surface de roulement du bandage.

2. Roue suivant la revendication 1, caractérisée en ce que les deux faces latérales extérieures (2a) du bandage (2) présentent chacune une première portion (2c) qui s'étend coplanaire avec les faces latérales (1c) de la jante (1), portion à laquelle se raccorde un arrondi (2d) qui se prolonge par les faces latérales (2a) du bandage (2).

3. Roue pour véhicules, notamment pour véhicules ferroviaires, comportant une jante (1) sur laquelle est monté un bandage (2) en matériau élastique, par exemple en caoutchouc ou en matière synthétique, avec une section transversale de jante (1) en forme de U, dont les flasques latéraux (1d) sont dirigés vers le bandage (2), roue caractérisée en ce que les deux flasques latéraux (1d) de la section transversale de jante de forme plane située entre ces flasques, s'étendent au moins jusque dans le domaine du diamètre médian du bandage (2), lequel est disposé à l'intérieur de ces flasques (1d) en laissant de chaque côté une fente axiale qui a une forme telle que pendant le processus de charge, se produit une application constamment croissante, partant de la surface intérieure de pourtour (2e) du bandage (2), des faces latérales extérieures (2a) du bandage (2) contre les deux flasques latéraux (1d) de la jante (1).

4. Roue suivant la revendication 3, caractérisée en ce que les deux flasques (1d) de la jante (1) portent, du côté du bandage (2), sur leurs extrémités libres, des arrondis (1b) et le bandage (2) est pourvu, dans le domaine de la transition entre sa surface de roulement (2b) et chacune des faces latérales (2a), d'évidements (2f) correspondants à ces arrondis (1b).

## Fig. 1

1a

1b

1c

1b

1

2c

2a

2d

2

2b

## Fig. 2